# EUROPÄISCHE PATENTANMELDUNG

(11) **EP 0 704 646 A2**
(43) Veröffentlichungstag der Anmeldung: **03.04.1996**
(21) Anmeldenummer: 95113255.4
(22) Anmeldetag: 23.08.1995
(51) Int. Cl.: F16J 15/12

(54) **Flachdichtung**

(30) Priorität: 31.08.1994 DE 4431018
(71) Anmelder: WOCO Franz-Josef Wolf & Co., D-63628 Bad Soden-Salmünster (DE)
(72) Erfinder: Wolf, Franz Josef, D-63628 Bad Soden-Salmünster (DE)
(74) Vertreter: Jaeger, Klaus, Dr.

(57) **Zusammenfassung**

Es ist eine Flachdichtung zur Anordnung an abzudichtenden Trennflächen von insbesondere Verbrennungkraftmaschinen vorgesehen mit einem Metallträger, der an wenigstens einer planen Oberflächenseite mit einer Dichtungsmasse versehen ist, wobei die Dichtungsmasse an einem zur abzudichtenden Trennfläche komplimentär ausgebildeten Metallträger als in Form eines aushärtbaren oder ausgehärteten Pulvers oder einer Pulvermischung angeordnet ist.

## Beschreibung

Die vorliegende Erfindung betrifft eine Flachdichtung zur Anordnung an abzudichtenden Trennflächen gemäß dem Oberbegriff des Anspruchs 1. Die Erfindung betrifft außerdem ein Verfahren zur Herstellung einer Flachdichtung gemäß dem Oberbegriff des Anspruchs 8.

Flachdichtungen bestehen im allgemeinen aus einem unter Pressung verformbaren Material, das in Abhängigkeit von der zu erwartenden Beanspruchung mit oder ohne Metallarmierung eingesetzt wird. Das verformbare Material, im Nachstehenden als Weichstoff bezeichnet, muß die folgenden Anforderungen erfüllen:
Hinreichende Verformbarkeit und Anpassungsfähigkeit, um die Unebenheiten zwischen den abzudichtenden Flächen ausfüllen zu können,
hohe Standfestigkeit unter statischer und dynamischer Einbaupressung, um eine unzulässige Abnahme der für die Dichtfunktion erforderlichen Press- oder Schraubenkraft zu verhindern, gute Wärmebeständigkeit, um ein Kriechen bei ansteigender Temperatur auszuschließen,
ausreichende Beständigkeit gegen die abzudichtenden flüssigen oder gasförmigen Medien,
schließlich muß der Weichstoff unter der Einbaupressung hinreichend verdichtbar sein, so daß alle durch Undichtheit führenden Poren und Kapillaren geschlossen werden.

Die Erfahrung lehrt, daß die genannten z.T. gegenläufigen Anforderungen von einem einheitlichen Stoff nicht erfüllt werden können. Alle bisher bekannten Weichstoffe bestehen daher aus anorganischen oder organischen Füllstoffen, wie z.B. Schwerspat oder Kork, einem teilweise elastischen oder vollelastischen Bindemittel, wie z.B. Phenolharz oder Kautschuk, und gegebenenfalls einer die Festigkeit erhöhenden Fasermatrix. Die Bestandteile aus einer wässrigen z.T. Lösemittel enthaltenden Mischung können auf Kalandern zu Dichtungsplatten verarbeitet werden. Es besteht auch die Möglichkeit, die Mischung mittels Walzwerken als Schicht auf glatte, gezackte oder perforierte Metallbänder oder Metallgewebe aufzutragen, wobei nach anschließender Wärmebehandlung armierte Dichtungswerkstoffe resultieren.

Ein weiterer Weg besteht darin, vorgefertigte Papiere oder Pappen unterschiedlichster Faser und Füllstoffzusammensetzung mit Bindemitteln, wie z.B. Harzlösungen oder Latex zu imprägnieren. Es wird auch die Möglichkeit praktiziert, das Bindemittel im Zuge des Herstellprozesses einer Papier- oder Pappebahn zuzugeben. Dieser unter der Bezeichnung "Beater-addition-Verfahren" bekannte Prozeß liefert eine fertige Weichstoffbahn, die gegebenenfalls durch Aufkleben oder Aufwalzen auf Metallträger verstärkt werden kann.

Dem geschilderten Verfahren ist gemein, daß zunächst die Dichtungsvorwerkstoffe bzw. die Dichtungsvorwerkstoffe als solche zu Dichtungsplatten oder -bahnen verarbeitet werden, gefolgt von einem weiteren Arbeitsgang, mittels dem die Dichtungsbahnen oder -platten dann an einem festigkeitsbestimmenden Trägergewebe, beispielsweise einem Metallträgergewebe angebracht werden.

Das Mischungsverhältnis der genannten Bestandteile ist in weiten Bereichen veränderbar, so daß Weichstoffe von steifer pappeartiger bis gummiähnlicher Konsistenz herstellbar sind.

Alle Weichstoffe der genannten Art haben folgende Nachteile:
Dichtwirkung und Standfestigkeit sind in hohem Maße von der Pressung abhängig, so daß nahezu für jeden Anwendungsfall eine besondere Ausführung des Weichstoffes und der daraus hergestellten Dichtung erforderlich ist. Da in vielen Fällen, wie z.B. bei Dichtungen an Verbrennungsmotoren, die Pressung innerhalb einer Dichtung großen Schwankungen unterworfen ist, ergeben sich daraus erhebliche Schwierigkeiten und ein hoher Aufwand bei der Abstimmung der Dichtungsausführung auf das Verspannungssystem.

Diese Schwankungen rekrutieren sich beispielsweise daraus, daß eine einstückige Dichtung an solchen zu dichtenden Stellen des Verbrennungsmotors angebracht werden muß, die beispielsweise im Bereich der Dichtflächen unterschiedlichen Temperaturbelastungen ausgesetzt sind, so daß sich auch unterschiedliche Wärmeausdehnungskoeffizienten einstellen, die zu im Bereich der Dichtungsfläche uneinheitlichen Spannungs- und damit Verschiebungszuständen führen, denen die dort eingesetzte Dichtung letztlich gerecht werden muß.

Das Verarbeiten eines in Platten oder Bahnen vorliegenden Dichtungsmaterials zu Dichtungen erfolgt durch Stanzen oder Schneiden mittels Wasserstrahl oder Laser, wobei große Mengen, z.T. 50% und mehr, an hochwertigen Abfällen entstehen, deren umweltschonende Aufarbeitung oder Entsorgung bisher nicht zufriedenstellend möglich ist.

Die Ursache hierfür liegt darin, daß derartige Dichtungen regelmäßig in Form der bereits angesprochenen Dichtungsbahnen oder Dichtungsplatten hergestellt werden, aus denen dann die zum Einbau in den Dichtungsbereich erforderlichen Dichtungen durch beispielsweise Schneiden oder Stanzen erhalten werden, so daß sich große Mengen an Dichtungsbahnen oder -platten einstellen, aus denen die erforderlichen Dichtungen erhalten wurden und die aber dann nicht mehr zur Gewinnung weiterer Dichtungen herangezogen werden können, so daß sie entsorgt werden müssen.

Der dringende Bedarf an Dichtungen, die ein sicheres funktionieren in einem weiten Pressungsbereich gewährleisten, führte in den letzten 10 Jahren zur Entwicklung von sogenannten Gummi-Metall-Dichtungen, bei denen ein Metallträger die Stützfunktion und ein anvulkanisiertes oder mechanisch an dem Träger befestigtes Gummielement die Dichtfunktion übernimmt. Dichtungen dieser Art erfüllen weitgehend die Anforderungen hinsichtlich der Abdichtfunktion, die Herstellung ist jedoch außerordentlich aufwendig und ebenfalls mit der Entstehung großer Mengen an teuren und nur unter hohem Aufwand entsorgbaren Abfällen verbunden.

Der Erfindung liegt daher zur Beseitigung der geschilderten Nachteile die Aufgabe zugrunde, eine kostengüstige Dichtung insbesondere für den Anwendungsbereich an Verbrennungsmotoren zu schaffen, die in einem weiten Pressungsbereich von z.B. 5 bis 50 N/mm² funktionsfähig ist und bei deren Herstellung nur wenige und zudem wiederverwertbare Abfälle entstehen. Außerdem soll ein Verfahren zur Herstellung einer derartigen Flachdichtung geschaffen werden.

Die Erfindung weist zur Lösung dieser Aufgabe die im Anspruch 1 angegebenen Merkmale auf. Vorteilhafte Ausgestaltungen der geschaffenen Dichtung sind in den weiteren Ansprüchen beschrieben. Außerdem weist das zur Lösung dieser Aufgabe geschaffene Verfahren die im Anspruch 8 angegebenen Merkmale auf.

Erfindungsgemäß ist eine Flachdichtung zur Anordnung an abzudichtenden Trennflächen von insbesondere Verbrennungskraftmaschinen vorgesehen, wobei die Flachdichtung einen Metallträger aufweist, der an wenigstens einer planen Oberflächenseite mit einer Dichtungsmasse versehen ist, wobei die Dichtungsmasse an einem zur abzudichtenden Trennfläche komplementär ausgebildeten Metallträger als in Form eines aushärtbaren oder ausgehärteten Pulvers oder einer Pulvermischung angeordnet ist.

Gemäß der Erfindung weist das Pulver oder die Pulvermischung vorzugsweise eine Bindemittel-Matrix mit an- oder eingelagerten plastisch und/oder elastisch verformbaren Kunststoff- und/oder Kork- und/oder Kautschukpartikel auf. In vorteilhafter Weise wird dabei das Pulver oder die Pulvermischung mittels einer elektrostatischen Auftragsbeschichtung an dem Metallträger angeordnet.

Gemäß der Erfindung ist dabei vorgesehen, daß der Metallträger wenigstens eine Erhöhung und/oder Vertiefung aufweist derart, daß bei in der Trennfläche angeordneter Flachdichtung im Bereich der Erhöhung und/oder Vertiefung örtlich erhöhte Vorspannkräfte auftreten. Hierdurch wird in vorteilhafter Weise erreicht, daß ein unzulässiges Setzen der in der Trennfläche angeordneten Flachdichtung und ein sich daraus ergebendes Undichtwerden der Gesamtanordnung vermieden wird, da die Erhöhung und/oder die Vertiefung dafür sorgt, daß keine großen Setzbeträge aufweisen, die für ein Nachlassen der Vorspannkraft der die Trennflächen zusammenhaltender Haltemittel, beispielsweise Zylinderschrauben auftreten kann.

In Fortführung der Erfindung kann dabei die Dichtungsmasse im ausgehärteten Zustand eine Schaumstruktur aufweisen, die insbesondere geschlossenzellig ausgebildet ist.

Schließlich ist es gemäß der Erfindung möglich, daß die Dichtung im Bereich der Außenfläche der Dichtungsmasse und/oder des Metallträgers eine zusätzliche dünne elastische Überzugsschicht aufweist, welche eine Erhöhung der Dichtwirkung der in der Trennfläche angeordneten Flachdichtung herbeiführt. Nach dem erfindungsgemäßen Verfahren wird die Flachdichtung aus einem Metallträger und einer daran angeordneten Dichtmasse hergestellt, wobei zunächst der der abzudichtenden Trennfläche flächenkomplementär ausgebildete Metallträger beispielsweise durch Stanzen oder Schneiden hergestellt wird, gefolgt von einem elektrostatischen Auftrag in einer die Dichtungsmasse bildenden Pulvermischung oder eines Pulvers, wobei anschließend das so elektrostatisch aufgetragene Pulver oder die Pulvermischung mittels einer Energiezufuhr zur Bildung einer weitgehend homogenen Dichtungsmasse an und/oder auf dem Metallträger geschmolzen wird, gefolgt von einem unter weiterer Energiezufuhr herbeigeführtem Aushärten dieser Dichtungsmasse.

Es ist also gemäß der Erfindung vorgesehen, daß ein gemäß der erforderlichen Dichtungsform gestanzter, oder geschnittener Metallträger bevorzugt nach einem elektrostatischen Auftragsverfahren mit einer Pulvermischung beschichtet wird, die als Hauptbestandteile ein härtbares Bindemittel und ein bereits vernetztes oder zum Teil vernetztes bzw. vulkanisiertes Elastomer enthält. Durch anschließende Energiezufuhr in Form von Heißluft oder Strahlung erfolgt zunächst ein Schmelzen, dann ein Aushärten des pulverförmigen Bindemittels, wobei eine fest am Metallträger haftende Dichtauflage resultiert, die im Unterschied zu herkömmlichen Weichstoffen dadurch gekennzeichnet ist, daß gummielastische, die Abdichtfunktion bewirkende Partikel in eine ausgehärtete, formstabile und daher standfeste Bindemittelmatrix eingelagert sind. Als Bindemittel eignen sich alle härtbaren, wärmestabilen Harze, wie z.B. Phenolharze, Epoxiharze, Polyimidharze und Polyesterharze. Als elastische Komponente sind alle hinreichend wärmestabilen Gummimehle, wie z.B. aus NBR (Acrylnitril-Butadien-Kautschuk), ACM (Acrylesterkautschuk) EACM (Ethylen-Acrylesterkautschuk) und FPM (Fluor-Kautschuk) geeignet. Die Pulvermischung kann darüber hinaus noch Zusätze enthalten, die eine Verbesserung der Verarbeitbarkeit und der Eigenschaften der Dichtauflage bewirken, wie z.B. Elastifiziermittel, Füllstoffe, Gleitmittel und Haftungsverbesserer. Im Zuge der Entwicklungsarbeiten konnte festgestellt werden, daß es für bestimmte Abdichtfälle von Vorteil ist, wenn das Bindemittel eine in der Regel geschlossenzellige Schaumstruktur aufweist, weil dadurch die Kompressibilität und Anpassungsfähigkeit der Dichtmittelauflage erhöht werden.

Die erfindungsgemäß erzeugte Dichtauflage kann in Abhängigkeit von der Teilchengrößeverteilung des Pulvers und der Verfahrenssteuerung Schichtdicken im Bereich von etwa 100µm bis 500µm aufweisen, wobei die Rauhigkeit als Differenz der höchsten und tiefsten Stelle der Oberfläche im Bereich von etwa 50µm bis 150µm liegen kann. Unter einer für Dichtungen üblichen Einbaupressung von z.B. 5 bis 50 N/mm² erfolgt eine vollständige Vergleichmäßigung der Oberfläche bei gleichzeitiger Anpassung an die Unebenheiten und Riefen der abzudichtenden metallischen Gegenflächen, wodurch die erforderliche Dichtwirkung erreicht wird.

Die Herstellung von Dichtungen nach dem der Erfindung zugrundeliegenden Prinzip ist in hohem Maße rationell und umweltschonend, weil beim Stanzen oder Schneiden der metallischen Träger nur problemlos wiederverwertbare, reine Metallabfälle entstehen und beim elektrostatischen Pulverbeschichten eine nahezu vollständige Verwertung des Pulvers gesichert ist.

Nachfolgend werden lediglich als Beispiel und der Verdeutlichung halber vier unterschiedliche Ausführungsbeispiele ausgeführt.

### Beispiel 1

Ein gemäß der Form einer Dichtung gestanzter metallischer Träger, Stahlqualität St, Dicke 0,3 mm, wird nach Entfettung und Behandlung mit einem speziellen Haftvermittler auf Basis eines Phenolharzes auf elektrostatischem Wege beschichtet mit einem Pulver bestehend aus
2,5 Gew.Tl. Phenolharz-Novolack mit Härter
1,5 Gew.Tl. Polyamid
4 Gew.Tl. Acrylnitril-Butadien-Kautschuk NBR (vulkanisiertes Gummimehl)
Nach dem Pulverbeschichten werden die Dichtungen in einem Heißluftofen 5 Minuten auf 170-180°C erwärmt.

### Beispiel 2

Ein gemäß der Form einer Dichtung gestanzter metallischer Träger aus Aluminium, Dicke 0,3 mm, wird nach Entfetten auf elektrostatischem Wege beschichtet mit einem Pulver bestehend aus
3 Gew.Tl. Phenolharz-Novolack mit Härter
3 Gew.Tl. Polyester-Blockamid
4 Gew.Tl. Fluor-Kautschuk FPM (vulkanisiertes Gummimehl)
Nach dem Pulverbeschichten werden die Dichtungen in einem Heißluftofen 5 Minuten auf 190-200°C erwärmt.

### Beispiel 3

Ein gemäß der Form einer Dichtung gestanzter metallischer Träger auf V2A-Stahl, Dicke 0,25 mm, wird nach dem Sandstrahlen und Entfetten auf elektrostatischem Wege beschichtet mit einem Pulver bestehend aus
3,5 Gew.Tl. Phenolharz-Novolack mit Härter
0,5 Gew.Tl. Polyamid
2 Gew.Tl. Fluor-Kautschuk, FPM
2 Gew.Tl. PTFE-Pulver
Nach dem Pulverbeschichten werden die Dichtungen in einem Heißluftofen 5 Minuten auf 190-200°C erwärmt.

### Beispiel 4

Eine gemäß Beispiel 1 hergestellte Dichtung wird anschließend mit einer Lösung bestehend aus
10 Gew.Tl. Fluor-Kautschuk (z.B. Viton^{(R)} B
90 Gew.Tl Butylacetat
bestrichen, besprüht oder mittels Walzenauftrag belegt, so daß nach dem Ablüften bei Raumtemperatur oder in Warmluft eine dünne, auf dem Untergrund gut haftende Elastomerauflage resultiert.

## Patentansprüche

1. Flachdichtung zur Anordnung an abzudichtenden Trennflächen von insbesondere Verbrennungskraftmaschinen mit einem Metallträger, der an wenigstens einer planen Oberflächenseite mit einer Dichtungsmasse versehen ist,
dadurch **gekennzeichnet**,
daß die Dichtungsmasse an einem zur abzudichtenden Trennfläche komplementär ausgebildeten Metallträger in Form eines aushärtbaren oder ausgehärteten Pulvers oder einer Pulvermischung angeordnet ist.

2. Dichtung nach Anspruch 1,
dadurch **gekennzeichnet**,
daß das Pulver oder die Pulvermischung eine Bindemittel-Matrix mit an- oder eingelagerten plastisch und/oder elastisch verformbaren Kunststoff- und/oder Kork- und/oder Kautschukpartikel aufweist.

3. Dichtung nach Anspruch 1 oder 2,
dadurch **gekennzeichnet**,
daß das Pulver oder die Pulvermischung mittels einer elektrostatischen Auftragsbeschichtung an dem Metallträger angeordnet ist.

4. Dichtung nach einem der Ansprüche 1 bis 3,
dadurch **gekennzeichnet**,
daß der Metallträger wenigstens eine Erhöhung und/oder Vertiefung aufweist derart, daß bei in der Trennfläche angeordneter Flachdichtung im Bereich der Erhöhung und/oder Vertiefung örtlich erhöhte Vorspannkräfte auftreten.

5. Dichtung nach einem der Ansprüche 1 bis 4,
dadurch **gekennzeichnet**,
daß die Dichtungsmasse eine Schaumstruktur aufweist.

6. Dichtung nach einem der Ansprüche 1 bis 5,
dadurch **gekennzeichnet**,
daß im Bereich der Außenfläche der Dichtungsmasse und/oder des Metallträgers eine zusätzliche dünne elastische Überzugsschicht vorgesehen ist.

7. Verwendung der Dichtung nach einem der vorstehenden Ansprüche zur Dichtung von Trennflächen von Verbrennungskraftmaschinen.

8. Verfahren zur Herstellung einer Flachdichtung, die einen Metallträger und eine daran angeordnete Dichtungsmasse aufweist,
**gekennzeichnet** durch
folgende Schritte:
a) Ausbilden eines zur abzudichtenden Trennfläche komplementär ausgebildeten Metallträgers
b) elektrostatisches Auftragen eines die Dichtungsmasse bildenden Pulvers oder einer Pulvermischung
c) Schmelzen des Pulvers oder der Pulvermischung mittels Energiezufuhr zur Bildung einer weitgehend homogenen Dichtungsmasse an und/oder auf dem Metallträger
d) Aushärten der Dichtungsmasse mittels Energiezufuhr
